# EUROPEAN PATENT APPLICATION

(11) **EP 3 831 450 A1**
(43) Date of publication of application: **09.06.2021**
(21) Application number: 20210974.0
(22) Date of filing: 01.12.2020
(51) Int. Cl.: A62B 35/00, F16B 45/02, B63B 21/54

(54) **REMOTE CLIPPING DEVICE**

(30) Priority: 02.12.2019 GB 201917609
(71) Applicant: Beta Climbing Designs Limited, Sheffield S8 0XQ (GB)
(72) Inventor: Hulley, Tim, Sheffield S8 0XJ (GB); Berry, simon, Sheffield S8 0XJ (GB)
(74) Representative: Froud, Christopher Andrew

(57) **Abstract**

A remote clipping device for remotely clipping a karabiner to an attachment point (such as a harness or anchor point) when working at height. The remote clipping device has a head with first and second contact portions configured to support a karabiner. The first and second contact portions are coupled by an arm which extends around the karabiner without the arm passing through a load axis of the karabiner. A resilient clip holds the gate of the karabiner open during clipping of the karabiner to the attachment point.

## Description

### Field of the Invention

The present invention relates to a remote clipping device, in particular a remote clipping device for remotely clipping a karabiner to an attachment point (such as a harness or anchor) when working at height.

### Background of the Invention

When working at height, workers must take precautions to reduce the risk of falling, such as clipping a fall arrest lanyard between their harness and an anchor point or safety line. For example, workers on a roof may clip their fall arrest lanyard to a safety line running across the roof. In the event the worker falls, the fall arrest lanyard will arrest their fall and reduce the risk of injury.

However, a fall can leave a worker hanging in free space, for example, over the edge of a roof. It can often be difficult to reach the fallen worker, especially if there is no access for an aerial work platform or the fallen worker is suspended high off the ground. Therefore, it may be necessary to perform a technical rope rescue, where a rescuer abseils down to the fallen worker either to clip on a haul line so that the fallen worker can be hauled to safety or to abseil down with the fallen worker. Such technical rope rescues require significant skill and training, and put the rescuers themselves at risk.

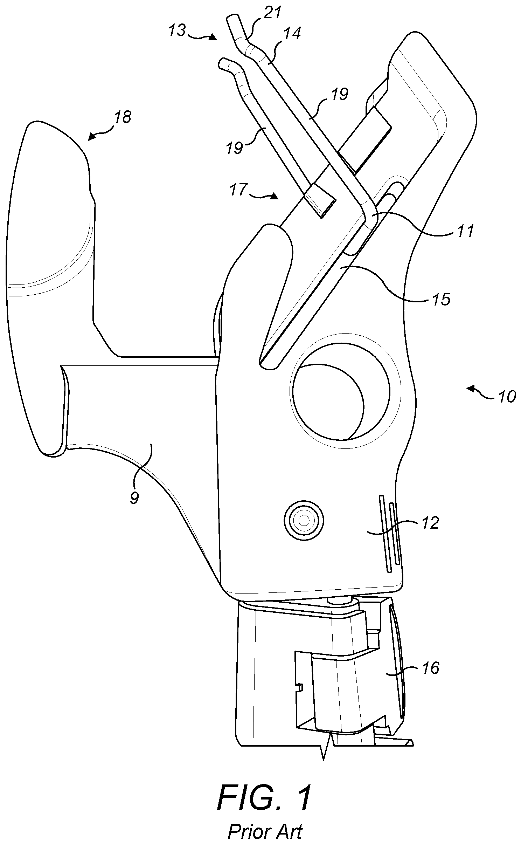

"Reach rescue" provides an alternative to technical rope rescue. In a reach rescue, a telescopic clip stick, like clip stick 10 shown in Figure 1, is used to clip a haul line onto the fallen worker remotely, avoiding the need for a rescuer to descend to the fallen worker. The haul line is attached to a karabiner. The karabiner is attached to the head 12 of the clip stick 10 which has a spring clip 14 to hold the gate of the karabiner open. The clip stick 10 has a telescopic pole 16 that can be extended towards the fallen worker, so that the open gate of the karabiner can be hooked around an attachment point on the fallen worker's harness. Once the karabiner is hooked around the attachment point, the clip stick 10 is pulled away, pulling the gate of the karabiner out of the spring clip 14 so that the gate of the karabiner closes around the attachment point, securing the haul line to the fallen worker.

Another aspect of working at height is using rope access equipment to gain access to a work position that cannot be reached any other way. For example, workers may use a combination of abseiling and ascending fixed ropes in order to reach a particular position during the construction and maintenance of a structure, or during tree felling and maintenance. Sometimes, it is desirable to be able to remotely clip an anchor point which is out of reach. For example, when climbing a structure from the ground, a rope can be clipped to an anchor point above the worker and the rope can then be ascended to allow the worker to make progress up the structure. A clip stick, such as clip stick 10, can be used to clip ropes to such anchor points that are otherwise out of reach.

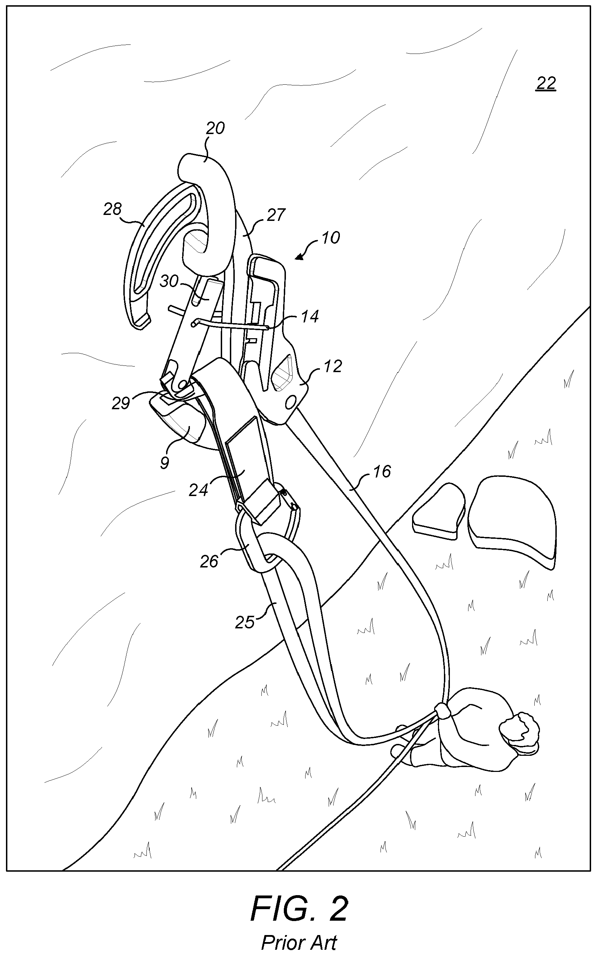

Clip sticks which are currently used in working at height applications have generally been modified from clip sticks designed for rock climbing. Figure 2 shows an example of a rock climbing clip stick 10 being used in a form of rock climbing called "sport climbing". In sport climbing, permanent anchor points 20 are fixed to the rock face 22. A climber has a rope attached to their harness and, as they climb, they clip their rope to these permanent anchor points 20 using quickdraws 24. To make progress, the climber spends periods of time climbing above their last anchor point before the next one can be clipped. If the climber slips, they will fall until caught by the last anchor point they clipped. Sometimes, a climber wants to be able to clip the next anchor point remotely, for example, to practice a section of the climb that they find difficult where there is a high chance they might fall.

Figure 2 shows an example of a climber using a rock climbing clip stick 10 to remotely clip a permanent anchor point 20 that is above them. The climber attaches their rope 25 through the rope karabiner 26 at one end of the quickdraw 24. A clipping karabiner 28 is attached to the head 12 of the clip stick 10, using spring clip 14 to hold the gate 30 of the clipping karabiner 28 open. The telescopic pole 16 is extended towards the permanent anchor point 20, so that the open gate 30 of the clipping karabiner 28 can be hooked around the fixed loop of the permanent anchor point 20. Once the clipping karabiner 28 is hooked around the permanent anchor point 20, the clip stick 10 is pulled away, pulling the gate 30 out of the spring clip 14 so that the gate 30 closes around the fixed loop of the permanent anchor point 20, securing clipping karabiner 28 and hence the rope to the permanent anchor point 20, allowing the climber to climb the rock face 22 with the protection of the rope from above.

Rock climbing clip sticks, such as the rock climbing clip stick 10, are not ideally suited to working at height applications. Rock climbing clip sticks were designed for use with rock climbing quickdraws 24, which have relatively small snap gate (non-locking) karabiners, like clipping karabiner 28 shown in Figure 2. In contrast, working at height requires robust industrial karabiners with high breaking strains, with locking mechanisms to prevent accidental opening of the karabiner's gate. Such industrial karabiners are much larger than the snap gate karabiners on quickdraws.

For remote reach and remote clipping when working at height, self-locking karabiners are the norm because screwing a screwgate karabiner remotely is challenging. Legislation may require the self-locking karabiners used in working at height applications to meet a minimum specification (such as EN362:2004 in Europe) but there is no standardisation or prescribed way of meeting this minimum specification and, as a result, many different designs exist.

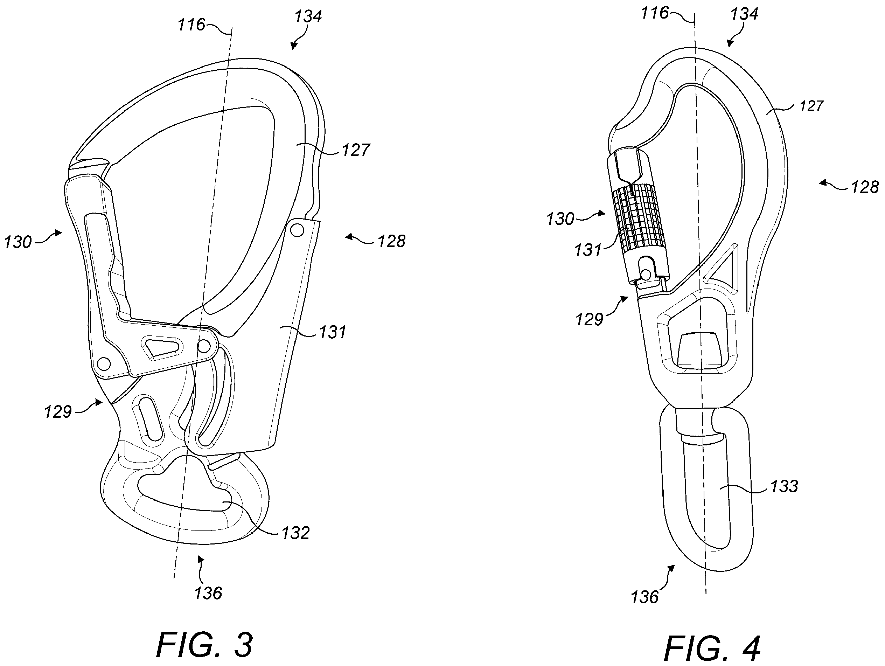

Figures 3 and 4 show examples of the kind of self-locking karabiners 128 that might be used in working at height applications which meet the minimum specifications of EN362:2004. The self-locking karabiners 128 of Figures 3 and 4 have locking mechanisms 131 to prevent accidental opening of the gate 130. In Figure 3, the self-locking karabiner 128 is a double-locking karabiner, where the locking mechanism 131 is a handle that must be squeezed to allow the gate 130 to open. The self-locking karabiner 128 in Figure 4 is a triple-locking karabiner, where the gate 130 has a locking mechanism 131 that is a sleeve which must be translated, and rotated before the gate 130 can be opened. Many other designs of self-locking karabiner exist which meet the minimum specification, with many different mechanisms for actuating the gate 130. This lack of standardisation means that rock climbing clip sticks which are designed for snap gate (non-locking) karabiners on quickdraws which are in comparison fairly uniform in size and design, may work poorly or not at all with some designs of self-locking karabiner. Also, the variability in the design of self-locking karabiners means that existing rock climbing clip sticks may require modification to work with particular self-locking karabiners, which is inconvenient and may mean that workers are left in an awkward situation where the clip stick and self-locking karabiners they have available are not compatible.

In addition to the self-locking karabiners for working at height applications being much bulkier than the snap gate karabiners typical on rock climbing quickdraws, the haul lines and ropes attached to those self-locking karabiners in working at height applications tend to be much bulkier than the thin slings common on quickdraws used for rock climbing. Also, those haul lines and ropes may be attached to the self-locking karabiner by a bulky knot or an inflexible stitched section. Increasingly, industrial karabiners have a captive eye 132 (Figure 3), or even a rotatable eye 133 (Figure 4), for attaching haul lines and ropes, which further increases size and bulk. The increased size and bulk of the self-locking karabiner and haul lines or ropes attached to them mean that existing clip sticks are at risk of snagging, which might prevent successful clipping of the self-locking karabiner and subsequent detachment of the clip stick. This could be a serious problem, which might hamper the rescue of a fallen worker who could be injured, or could cause rope access workers to become stranded and require rescue.

It would therefore, be desirable to find an improved clip stick which is more suitable for use in working at height applications, and which is compatible with a broader range of self-locking karabiners, including those with a captive eye or rotatable eye.

### Summary of the Invention

According to an aspect of the invention, there is provided a remote clipping device for remotely clipping a karabiner to an attachment point.

The remote clipping device allows for remotely clipping a karabiner to an attachment point, such as an attachment point on a harness or an anchor point (such as an anchor point permanently or temporarily fixed to a structure or a landform).The remote clipping device may be used in a "reach rescue", where the remote clipping device is used to clip a haul line to a harness of a fallen worker who is out of reach to allow the fallen worker to be hauled to safety. The remote clipping device may be used in rope access, to clip an anchor point that is out of reach when climbing a structure or landform. For example, to allow workers to make faster progress when ascending structures (such as buildings, oil rigs and wind turbines) while reducing the risk of swinging, by allowing the workers to clip fixed lines to otherwise out of reach anchor points. The remote clipping device may also have tactical applications, for example, allowing military personnel to remotely clip abseil ropes to anchors points when affecting an escape, or to clip ladders onto boats.

The remote clipping device comprises a head having a first contact portion and a second contact portion. The first and second contact portions are configured to contact a body of a karabiner (that is, neither the first nor the second contact portions are in contact with the gate of the karabiner). An arm extends around the karabiner to couple the first and second contact portions without the arm passing through a load axis of the karabiner.

Existing clip sticks tend to have an arm attaching the first and second contact portions either side of the karabiner which passes around an end of the karabiner, through the load axis of the karabiner. This arm at least partially obscures the end of the karabiner to which a rope or line is attached, and restricts the size of karabiner that can be accommodated by a clip stick of given dimensions. Having the arm pass around the end of the karabiner also means that karabiners with a captive or rotatable eye will not fit in existing clip sticks, as the eye will clash with the arm which passes around the end of the karabiner. Even if the karabiner does fit, there is a risk that the clip stick will fail to detach from the karabiner, or the arm may get snagged on the rope or line attached to the karabiner.

In contrast, the claimed remote clipping device has an arm which extends around the karabiner without passing through a load axis of the karabiner. That is, the arm does not pass around the end of the karabiner to which a rope or line is attached, and therefore the arm does not obscure the end of the karabiner or clash with any captive or rotatable eye. Instead, there is free space at the end of the karabiner into which the end of the karabiner can extend, however large the karabiner, and regardless of whether or not the karabiner has a captive or rotatable eye. In this way, the claimed remote clipping device is more universally compatible with industrial karabiners, including those with captive and rotatable eyes, without requiring any modification or customisation to work with a particular type of karabiner.

The remote clipping device may comprise a resilient clip configured to hold the gate of the karabiner open during clipping of the karabiner to the attachment point. Such a resilient clip helps to hold the gate open for easier clipping. The resilient clip also attaches the karabiner to the remote clipping device in a way that is stable while also allowing easy and smooth detachment of the karabiner after clipping. Together with the first and second contact portions, the resilient clip provides a third point of contact with the karabiner to improve stability. The extra stability and holding power of the resilient clip allows the arm to be relatively thin while still providing stable support for the karabiner necessary to prevent accidental release of the karabiner. The relatively thin arm makes it easier to release the karabiner from the remote clipping device, without the awkward manipulation required by some remote clipping devices (particularly those with a sleeve design), by simply pulling the remote clipping device away after clipping, readily releasing the remote clipping device without the risk of snagging.

The resilient clip may receive the gate of the karabiner in order to hold the gate open. That is, a portion of the resilient clip may be temporarily fastened to the gate, to hold the gate open during clipping. After the karabiner has been clipped to the attachment point, the resilient clip may be unfastened from the gate (for example, by pulling the whole remote clipping device away from the karabiner).

The resilient clip may comprise a substantially U-shaped element (for example, made from wire). An open end of the substantially U-shaped element may receive the gate of the karabiner. Legs of the substantially U-shaped element may be pinched together adjacent to the open end in order to help retain the gate of the karabiner.

The head may comprise an opening and the resilient clip may be moveable within the opening. For example, a looped end of the substantially U-shaped element may be received within the opening in the head. The resilient clip may be trapped within the opening. For example, a pole attached to the head may prevent the resilient clip from being removed from the opening (preventing the resilient clip from being detached from the head). For example, the looped end of the substantially U-shaped element may be looped around the pole to prevent removal of the resilient clip from the head.

The first and second contact portions may define a plane. The arm may extend out of the plane as the arm extends around the karabiner
The first and second contact portions may be configured to be located either side of the load axis of the karabiner. The first contact portions may be configured to contact a spine of the karabiner. The first contact portion may comprise a groove configured to receive a length of the spine of the karabiner (that is, the spine of the karabiner may sit in the groove). The second contact portion may be configured to contact a region of a body of the karabiner adjacent to where a gate pivots about the body, that is, without contacting the gate of the karabiner.

The arm may comprise a notch adjacent to the second contact portion. The notch may be configured to receive an elastomeric ring. The notch may locate the elastomeric ring next to the second contact portion. The elastomeric ring helps to locate the karabiner with the second contact portion and helps to prevent the karabiner from moving around. However, unlike a fixed rigid locating feature, the elastomeric ring can readily roll out of the notch and off the end of the arm which helps to prevent the remote clipping device from snagging.

The remote clipping device may further comprise a telescopic pole coupled to the head. The telescopic pole allows for remote clipping of attachment points which are out of reach. The pole may comprise extruded aluminium sections. Each section of a telescopic pole may comprise flip locks configured to control the extension of that section. The pole sections may have a profile which reduces flex and twist. For example, the profile may be tri-oval. Alternatively, the profile may be generally circular or elliptical with grooves or channels to prevent twisting.

The first contact portion may comprises a length configured to contact the spine of the karabiner (for example, a groove to receive the spine of the karabiner). An angle between an axis of the telescopic pole and the length configured to contact the spine of the karabiner is less than 50°,less than 35°, less than 30°, or less than or equal to 25°.

The pole may prevent the resilient clip from being removed from the head. The resilient clip may be held in place by the pole. The pole prevents the resilient clip from being removed or becoming disconnected from the head while allowing the resilient clip a great deal of freedom of movement which allows the resilient clip to accommodate karabiners of different dimensions and gate placements.

A karabiner may be any kind of metal ring having a sprung gate of the type used for connecting equipment (such as lines, wires, ropes, lanyards, harnesses, anchor points and slings) in rock climbing, mountaineering, working at height and rope access. A karabiner has first and second ends each configured to receive equipment. The first and second ends are coupled by a spine on a first side and a gate on a second side.

A karabiner may be one of: locking, self-locking, double-locking and triple locking. A karabiner may have a captive eye or a rotatable eye. A karabiner may be a scaffold hook, or other karabiner with a clipping basket sized for oversized anchors such as scaffolding. The karabiner may comply with legislation or standards governing karabiners for use is industrial rope access or working at height, such as EN362:2004.

A load axis may be an axis along which a load is applied between first and second ends of a karabiner. The load axis may be a major axis of a karabiner.

### Brief Description of the Drawings

The invention shall now be described, by way of example only, with reference to the accompanying drawings in which:
Figure 1 shows an example of a prior art clip stick designed for rock climbing;
Figure 2 illustrates the rock climbing clip stick of Figure 1 being used to remotely clip a quickdraw to a permanent anchor in sport climbing;
Figures 3 and 4 show examples of self-locking karabiners that may be used in industrial working at height applications;
Figure 5 shows a remote clipping device according to an embodiment of the present invention;
Figure 6 shows a side view of the head of the remote clipping device of Figure 5 in more detail; and
Figure 7 shows a top view of the head of the remote clipping device of Figure 5 in more detail.

### Detailed Description

As discussed above, Figures 1 and 2 show an example of a prior art clip stick 10 which has been designed for clipping quickdraws 24 to permanent anchors 20 when sport climbing. The rock climbing clip stick 10 has a first contact portion 17 with a groove into which the spine 27 of a karabiner 28 can sit, and a second contact portion 18 with a groove for contacting a region 29 just below where the gate 30 of the karabiner 28 pivots on the body of the karabiner 28. A generally U-shaped resilient clip 14 is secured at its looped end 11 through slot 15. The U-shaped resilient clip 14 can slide up and down the slot 15 to allow for limited variation in the size of the karabiner 28 while preventing the resilient clip 14 from becoming detached. The open end 13 of the resilient clip 14 receives the gate 30, and the legs 19 of the resilient clip 14 adjacent the open end 13 are pinched together at point 21 to help retain the gate 30 in the resilient clip 14, holding the gate 30 open.

Figures 3 and 4 illustrate examples of self-locking karabiners 128 which may be used in working at height applications. Each karabiner 128 has a first end 134 and a second end 136. The first end 134 may be clipped to an attachment point, such as a harness or anchor. A rope, haul line, sling or the like may be tied with a knot or stitched around the second end 136. In the examples of Figure 3 and 4, the second end 136 has a captive eye 132 or rotatable eye 133. The first and second ends 134, 136 are coupled by a spine 127 on a first side of the self-locking karabiners 128 and a gate 130 on a second side of the self-locking karabiners 128. The self-locking karabiners 128 have a load axis 116 along which load is applied between the first and second ends 134, 136 when the karabiners 128 are loaded.

In the prior art clip stick 10, an arm 9 extends between the first and second contact portions 17, 18, passing around the second end 136 of the karabiner 10, directly through the load axis 116 of the karabiner 28. This is not a problem when clipping a flexible quickdraw 24 when rock climbing, since the quickdraw 24 can easily flex around the arm 9 as shown in Figure 2. However, large self-locking karabiners for working at height applications, such as self-locking karabiners 128 shown in Figures 3 and 4, will simply not fit into the rock climbing clip stick 10. For example, the arm 9 will clash with parts of the self-locking karabiners 128, such as the captive eye 132 or rotatable eye 133, meaning that the self-locking karabiners 128 cannot be fitted into the grooves of the first and second contact portions 17 and 18. Even on smaller self-locking karabiners without a captive eye 132 or rotatable eye 133, the arm 9 passing around the second end 136 of the karabiner will obscure the end of the karabiner, making it difficult to accommodate a rope or haul line on the second end 136. Such self-locking karabiners are at risk of being forced out of the grooves and becoming detached from the clip stick 10 prematurely or the clip stick 10 may fail to detach from the karabiner properly, and the clip stick 10 may become snagged on the rope or haul line.

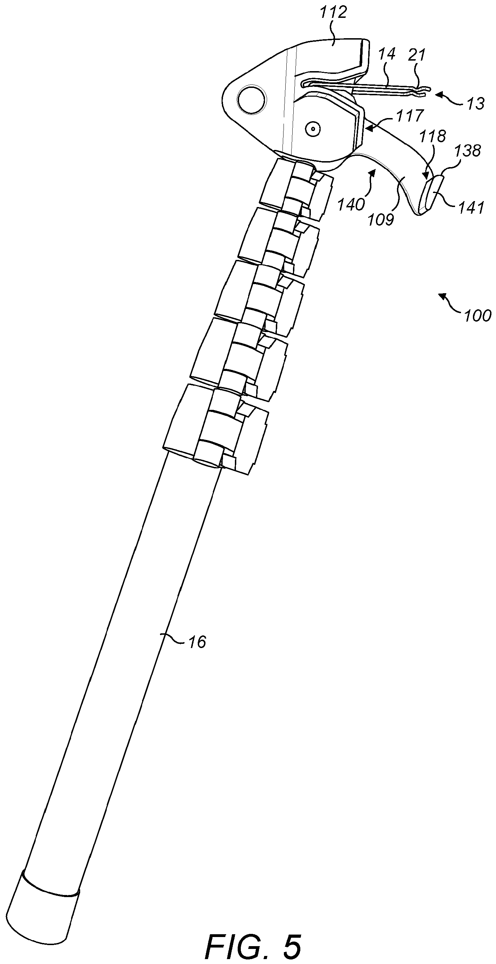

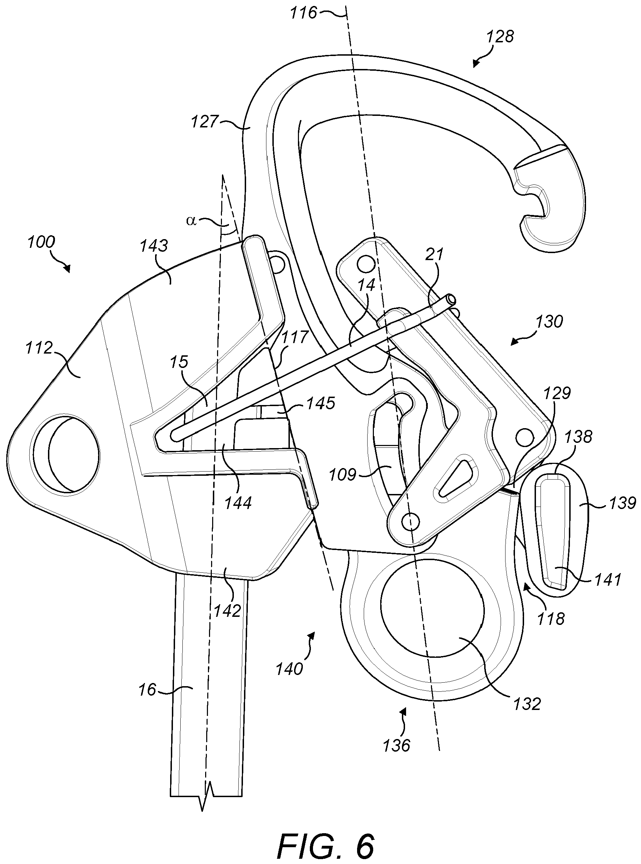

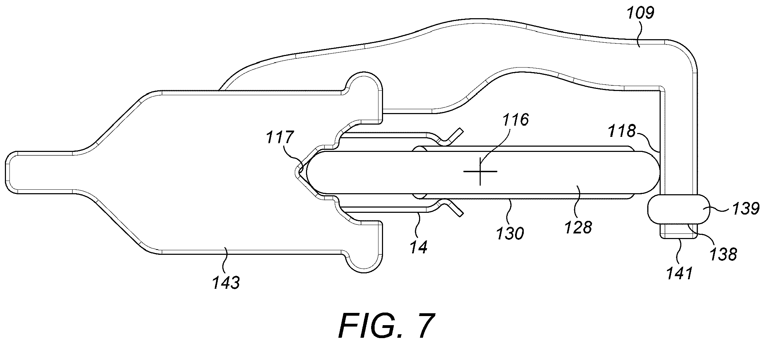

Figures 5-7 show a remote clipping device 100 according to the present invention which overcomes these limitations in the prior art clip stick and is more suited for use with self-locking karabiners in working at height applications.

The remote clipping device 100 has a head 112 with a first contact portion 117 with a groove into which the spine 127 of a self-locking karabiner 128 sits, and a second contact portion 118 for contacting a region 129 just below where the gate 130 pivots on the body of the karabiner 128. The second contact portion 118 does not have a groove but may be ribbed to reduce slippage between the second contact portion 118 and the karabiner 128. The first and second contact portions 117, 118 are coupled by an arm 109 which extends around the outside of karabiner 128 without passing through the load axis 116 of the karabiner 128. That is, the arm 109 does not pass around the second end 136 of the karabiner 128 to which a rope or line is attached, and therefore the arm 109 does not obscure the second end 136 of the karabiner 128 or clash with any captive eye 132 or rotatable eye 133. Rather, any captive eye 132 or rotatable eye 133 is suspended in free space in channel 140 between head 112 and the end 141 of the arm 109. This arrangement leaves free space into which the second end 136 of the karabiner 128 can extend, however long the karabiner 128 is, and regardless of whether or not the karabiner 128 has a captive eye 132, or a rotatable eye 133. As a result, the claimed remote clipping device 100 is more universally compatible with all kinds of karabiner used in working at height applications, including those with captive and rotatable eyes, without requiring any modification or customisation to work with a particular type of karabiner.

A telescopic pole 16 is coupled to the head 112 to permit remote clipping of attachment points which are out of reach. The telescopic pole 16 is made of a number of extruded aluminium sections which fit inside one another. Each section of the telescopic pole 16 has flip locks which allow the extension of that section to be controlled. The pole sections have a generally circular profile with grooves to reduce flexing and twisting.

The head 112 is tilted with respect to the telescopic pole 16, but by a smaller angle than prior art rock climbing clip sticks. In prior art rock climbing clip stick 10, the angle α between the first contact portion 17 and the axis of the telescopic pole 16 is around 35°, and in some rock climbing clip sticks this angle is as much as 50°. Having the head tilted with respect to the telescopic pole in a rock climbing clip stick by a relatively large angle makes it easier to clip a quickdraw 24 onto the permanent anchors 20 found when sport climbing, but having the head 112 tilted in this way causes problems with large self-locking karabiners, like karabiners 128 shown in Figures 3 and 4. It makes attaching the karabiners 128 more difficult or impossible, and it increases the chance that the clip stick 10 will fail to detach properly and may become snagged on the rope or haul line. So, instead, the angle α between the first contact portion 117 and the axis of the telescopic 16 pole in the remote clipping device 100 is less than 35°, and optimally around 25°. This helps to ensure that the second end 136 of the karabiner 128 hangs in free space in the channel 140, reducing the chances that any part of the karabiner 128 will clash with any part of the remote clipping device 100 and not fit, and reducing the chance of the remote clipping device 100 failing to detach or becoming snagged on the rope or haul line when detaching the karabiner 128 from the remote clipping device 100.

The end 141 of the arm 109 has a notch 138 adjacent to the second contact portion 118. An elastomeric ring 139 can be located on the notch 138 which helps to prevent the karabiner 128 from moving around. However, unlike a fixed rigid locating feature, the elastomeric ring 139 can readily roll out of the notch 134 and off the end 141 of the arm 136 which helps to prevent the remote clipping device 100 from snagging when it is detached from the karabiner 128.

A through hole in lower portion 142 of the head 112 aligns with a blind hole in upper portion 143 of the head 112, forming a passage which passes through opening 144. A slot 145 through the first contact portion 117 allows a resilient clip 14 to be inserted into the opening 144. The telescopic pole 16 is passed through the hole in the lower portion 142 and into the blind hole in the upper portion 143, passing through the resilient clip 14. The telescopic pole 16 is secured, for example, by adhesive or a fastener fixed through the head 112 and the telescopic pole 16. The telescopic pole 16, mounted in this way, prevents the resilient clip 14 from being removed from the opening 144 while allowing the resilient clip 14 significant freedom of movement around the opening 144 which allows the resilient clip 14 to accommodate self-locking karabiners with widely different dimensions and gates. The resilient clip 14 receives the gate 130 of the karabiner 128 in order to hold the gate 130 of the karabiner 128 open. The resilient clip 14 is similar to that on the prior art clip stick 10, but made of heavier gauge wire to handle the heavier gates 130 found on self-locking karabiners 128.

Although the invention has been described in terms of specific examples, the skilled person will appreciate that various modifications could be made which would still fall within the scope of the appended claims.

In particular, although the remote clipping device 100 has been described in relation to its use with a particular self-locking karabiner with a captive eye 132, it should be appreciated that the design of the remote clipping device 100 and in particular the arm 109 means that the remote clipping device 100 is highly versatile and suited for use with any karabiners. For example, the remote clipping device may be used with snap gate (non-locking) karabiners, self-locking karabiners, double-locking karabiners, triple-locking karabiners, karabiners with and without captive or rotatable eyes, and karabiners with ropes, slings, lanyards and lines knotted or stitched to them, including karabiners adhering to EN362:2004.

The head 112 may be manufactured from nylon-6 or aluminium.

## Claims

1. A remote clipping device (100) for remotely clipping a karabiner (128) to an attachment point, the remote clipping device (100) comprising:
a head (112) having a first contact portion (117) and a second contact portion (118), the first and second contact portions (117, 118) configured to contact a body of a karabiner (128);
an arm (109) which extends around the karabiner (128) to couple the first and second contact portions (117, 118) without the arm (109) passing through a load axis (116) of the karabiner (128); and
a resilient clip (14) configured to hold the gate (130) of the karabiner (128) open during clipping of the karabiner (128) to an attachment point.

2. The remote clipping device (100) of claim 1, wherein the first and second contact portions (117, 118) define a plane and the arm (109) extends out of the plane as the arm (109) extends around the karabiner (128).

3. The remote clipping device (100) of either of claims 1 or 2, wherein the first and second contact portions (117, 118) are configured to be located either side of the load axis (116) of the karabiner (128).

4. The remote clipping device (100) of any preceding claim, wherein the first contact portion (117) is configured to contact a spine (127) of the karabiner (128).

5. The remote clipping device (100) of claim 4, wherein the first contact portion (117) comprises a groove configured to receive a length of the spine (127) of the karabiner (128).

6. The remote clipping device (100) of any preceding claim, wherein the second contact portion (118) is configured to contact a region of the body of the karabiner (128) adjacent to where the gate (130) pivots about the body without contacting the gate (130).

7. The remote clipping device (100) of any preceding claim, where the arm (109) comprises a notch (138) adjacent to the second contact portion (118), wherein the notch (138) is configured to receive an elastomeric ring (139).

8. The remote clipping device (100) of any preceding claim, wherein the resilient clip (14) is configured to receive the gate (130) of the karabiner (138) in order to hold the gate (130) of the karabiner (138) open.

9. The remote clipping device (100) of any preceding claim, wherein the head (112) comprises an opening (144) and the resilient clip (14) is moveable within the opening (144).

10. The remote clipping device (100) of any preceding claim, wherein the resilient clip (14) comprises a substantially U-shaped element, preferably wherein a looped end (11) of the substantially U-shaped element is received within an opening (144) in the head (112).

11. The remote clipping device (100) of claim 10, wherein an open end (13) of the substantially U-shaped element receives the gate (130) of the karabiner (128).

12. The remote clipping device (100) of either of claims 10 or 11, wherein legs (19) of the substantially U-shaped element are pinched together adjacent to the open end (13) in order to retain the gate (130) of the karabiner (128).

13. The remote clipping device (100) of any preceding claim, further comprising a telescopic pole (16) coupled to the head (112).

14. The remote clipping device (100) of claim 13, wherein the first contact portion (117) comprises a length configured to contact the spine (127) of the karabiner (128), wherein an angle between an axis of the telescopic pole (16) and the length configured to contact the spine (127) of the karabiner (128) is less than 50°, less than 35°, less than 30°, or less than or equal to 25°.

15. The remote clipping device (100) of either of claims 13 or 14, wherein the telescopic pole (16) prevents the resilient clip (14) from being removed from the head (112).
